# EUROPEAN PATENT APPLICATION

(11) **EP 1 691 300 A1**
(43) Date of publication of application: **16.08.2006**
(21) Application number: 04819902.0
(22) Date of filing: 02.12.2004
(51) Int. Cl.: G06F 17/30

(54) **INFORMATION NOTIFICATION APPARATUS AND INFORMATION NOTIFICATION METHOD**

(30) Priority: 05.12.2003 JP 2003407202; 05.12.2003 JP 2003407203
(71) Applicant: MATSUSHITA ELECTRIC INDUSTRIAL CO., LTD., Kadoma-shi, Osaka 571-8501 (JP)
(72) Inventor: SUGIYAMA, Keiji, Jyoyo-shi, Kyoto 610-0121 (JP); HIRAI, Junichi, Osaka 564-0073 (JP); TAKEMURA, Masashi, Osaka-shi, Osaka 535 0021 (JP)
(74) Representative: Pautex Schneider, Nicole Véronique
(86) International application number: PCT/JP2004/017952
(87) International publication number: WO 2005/055089

(57) **Abstract**

To provide an information notification apparatus which includes: a rule management unit (103) which holds (a) an information notification rule generated based on the information (TPO information) concerning the preference of a specific user (mother), the rule defining that predetermined information ("Buy milk.") should be notified to the user (mother) in the case where the user (mother) satisfies predetermined conditions ("Milk is on sale nearby." and "I have 500 yen or more.") and (b) an information notification rule which is generated based on the information concerning the preference of another user (father); and a rule execution unit (107) which notifies the user (mother) of the information ("Buy local sake.") to be notified to another user (father) in the case where the conditions ("Local sake, which is rice wine, is on sale nearby." and "It costs 2000 yen or less.") which are defined by the information notification rule concerning another user (father) is satisfied by the user (mother).

## Description

### Technical Field

The present invention relates to an information notification apparatus and which realizes an information notification service for users.

### Background Art

Today, the Internet is inundated by a wide variety of information, and thus how to obtain useful information from among such information is a critical problem. As a countermeasure to the problem, there are many such Web sites on the Internet that provide information notification services which select information suitable for each user based on the user profile such as user preference information and a user behavior history and notify the user of the suitable information (For example, refer to Reference Document 1).

In addition to the above-described user profile, each user in a mobile environment is provided with, such an information notification service which selects and notifies (distributes) the information which is more suitable for the user by determining user circumstances based on: position information which is obtainable from a Global Positioning System (GPS) (positioning information service) device mounted in a mobile terminal; and information of a product or a service which is available in the proximity of the user and obtainable using a device for a short distance wireless communication.

These information notification services provide the effect of distributing neighborhood travel and sales information depending on the current position of the user.

Conventionally, information notified to users has been selected from among information registered in a server which realizes such an information notification service. However, there has also been provided such services that select information suitable for each user from among area information which is obtainable using the above-described device for a short distance wireless communication (For example, refer to Reference Document 2).

In this information notification service, a user previously registers information of a necessary product in a server or a terminal which realizes the information notification service. The service selects the information which matches the information registered by each user from among information of products and services which are obtainable through a short distance wireless communication, and provides the user with the suitable information. In this way, the user can know that the product or the service, which is present nearby, matches his or her preference or is the one which he or she has been looking for.

As described above, information notification services (hereinafter referred to as TPO information notification services) based on user TPO (T as time, P as place, and O as *preference* here) are becoming realized by using user position information, information which is obtainable from the surroundings (hereinafter simply referred to as area information) and a user profile.

As of today, TPO information notification services like this are services for individuals. Information notification services considering TPOs of many specified or unspecified users have not yet been realized.

However, depending on the types of information to be notified, there are many types of information for which TPOs of plural users are desired to be considered. For example, it is desirable that information such as "Milk needs to be bought." be shared with all of specific members such as "family" members. In this case, the information is desired to be notified to the members in the case where any of the family members gets close to the area where milk is on sale.

In addition, for a user who is looking for "a limited edition CD of an artist", it is extremely useful to be able to search a friend's neighborhood in addition to the user's own neighborhood for a desired product.
Reference Document 1: Japanese Laid-open Patent Application No. 2001-265809.
Reference Document 2: Japanese Laid-open Patent Application No. 2002-149773.

### Disclosure of Invention

### Problem to be Solved

However, it is difficult to notify information considering TPOs of a number of people as described above in currently provided TPO information notification systems.

As described above, current TPO information services do not notify information considering TPOs of a number of users. Therefore, an object of the present invention is to realize an information notification service having a function for considering TPOs of plural users.

In order to solve the above-described problem, an object of the present invention is to realize TPO information notification service based on TPOs of plural users by structuring groups of plural users and enabling the users in each group to share information such as rules for information notification (hereinafter simply referred to as information notification rules). Information notification rules define the distribution conditions, for example, types and notification timing of desired information such as user profiles, user area information, "Notification is executed in the case where any of us gets close to the area where milk is on sale." and "No information distribution is allowed during a meeting.".

### Means for Solving Problem

Therefore, the information notification apparatus of the present invention includes: a rule holding unit which holds (a) an information notification rule generated based on information concerning a preference of a specific user, the rule defining that predetermined information should be notified to the specific user in the case where the specific user satisfies a predetermined condition and also (b) an information notification rule generated based on information concerning a preference of another user; and an information notification unit which notifies the specific user of predetermined information needed to be notified to the another user, in the case where a condition which is defined by the information notification rule concerning the another user is satisfied by the specific user.

The present invention can realize information notification services based on TPOs of plural users. In other words, this makes it possible (1) to search the neighborhood of other people for information which matches own preferences, and (2) to realize efficient information notification services by enabling each group made up of specific members to share information notification rules.

Note that the present invention can be realized not only as an information notification apparatus like this but also as a hierarchical node display method including steps corresponding to unique units included in such an information notification apparatus and a program causing a computer to execute these steps. In addition, such a program can be distributed via a recording medium such as a CD-ROM or a communication medium such as the Internet.

### Brief Description of Drawings

FIG. 1 is a block diagram of a communication system which provides TPO information notification services in an embodiment of the present invention (First Embodiment).
FIG. 2 is a diagram showing an example of group information managed by the group information management unit 101 (First Embodiment).
FIG. 3A is a diagram showing an example of a dialog screen on a user terminal at the time when the rule generation unit 102 generates information notification rules.
FIG. 3B is a diagram showing an example of a dialog screen for asking a user whether or not the generated information notification rules should be registered (First Embodiment).
FIG. 4 is a diagram showing a concrete example of an ECA rule in the case where the information notification rule shown in FIG. 3B is an ECA rule (First Embodiment).
FIGS. 5A and 5B each is a diagram showing an example of information notified to each member of a group (First Embodiment).
FIG. 6 is a flow chart illustrating the process of registering information notification rules for the group in an embodiment of the present invention (First Embodiment).
FIG. 7 is a flow chart illustrating the process of determining whether or not the information notification rules registered for the group should be executed in an embodiment of the present invention
(First Embodiment)
FIG. 8 is a flow chart illustrating the process of executing and controlling information notification rules shared among group members in an embodiment of the present invention (First Embodiment).
FIG. 9 is a state-transition diagram of the execution of information notification rules which change depending on determination by the rule execution determination unit 105 (First Embodiment).
FIG. 10 is a block diagram of a communication terminal which provides TPO information notification services in an embodiment of the present invention (Second Embodiment).
FIG. 11 is a diagram indicating the execution procedure of a TPO information notification service in an embodiment of the present invention (Second Embodiment).
FIG. 12 is a block diagram of a communication terminal which provides a TPO information notification service in an embodiment of the present invention (Third Embodiment).
FIG. 13 is a diagram showing an example of group management information managed by the group management unit 1307a (Third Embodiment).
FIG. 14 is a diagram indicating the execution procedure of a TPO information notification service (Third Embodiment).

### Descriptions of Reference Numerals

100 Communication system
102 Rule generation unit
101 Group information management unit
103 Rule management unit
104 User information management unit
106 Group determination unit
105 Rule execution determination unit
107 Rule execution unit
108 Feedback collection unit
109 User terminal
1100a and 1100b Communication terminal
1103a and 1103b Rule execution determination unit
1104a and 1104b Rule execution unit
1105a and 1105b Execution result display unit
1106a and 1106b Execution result communication unit
1107 Information notification rule R
1108 Information terminal
1300a and 1300b Communication terminal
1301a and 1301b User information sharing unit
1302a and 1302b Area information obtainment unit
1303a and 1303b Rule execution determination unit
1304a and 1304b Rule execution unit
1305a and 1305b Execution result display unit
1306a and 1306b Execution result communication unit
1307a and 1307b Group management unit
1308a and 1308b Feedback obtainment unit

### Best Mode for Carrying Out the Invention

### (First Embodiment)

An embodiment of the present invention will be described below.

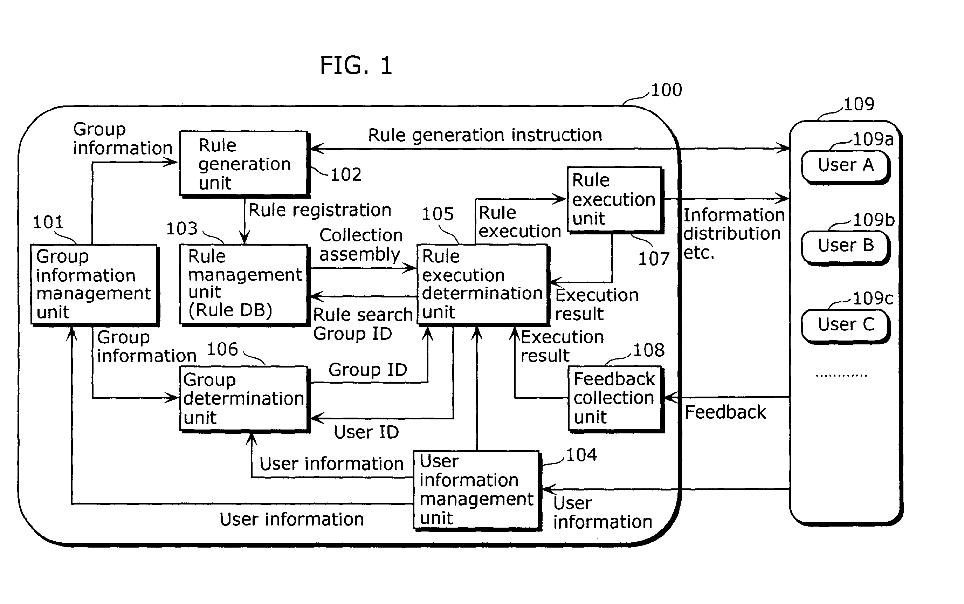

FIG. 1 is a block diagram of a communication system, in an embodiment, which realizes information notification services based on TPO information of plural users.

The communication system 100 in the embodiment shown in FIG. 1 includes: a rule generation unit 102 which generates information distribution rules to be executed based on TPO information of people; a group information management unit 101 which defines a specific group and manages the information of the group; a rule management unit 103 which registers and manages the generated rules for a specific individual or group; a user information management unit 104 which obtains and manages TPO information of plural users; and a group determination unit 106 which determines the group to which a specific user belongs; a rule execution determination unit 105 which selects the rule to be executed and manages the rule status; a rule execution unit 107 which executes the selected rule; and a feedback collection unit 108 which collects user behavior results based on the notified information.

Note that the "rule holding unit" in Claim 1 corresponds to the rule generation unit 102 and the rule management unit (rule DB) 103 in FIG. 1. Also, the "information notification unit" corresponds to the rule execution determination unit 105 and the rule execution unit 107. The "group determination unit" in Claim 2 corresponds to the group information management unit 101, the user information management unit 104 and the group determination unit 106 in FIG. 1. Also, the "rule generation unit" in Claim 4 corresponds to the rule generation unit 102 in FIG. 1. Further, the "behavior determination unit" in Claim 6 corresponds to the feedback collection unit 108 in FIG. 1.

Note that the term "user" to be used hereinafter in this specification is a user of the information notification service of the present invention.

In the present invention, each user uses a communication apparatus in order to use the above-described communication system which provides TPO information notification services. Such an apparatus is simply referred to as user terminal hereinafter in this specification.

Item 109 in FIG. 1 is a group of user terminals, and items 109a, 109b and 109c show respective user terminals to be used by a user A, a user B and a user C.

Note that it is assumed that a user terminal is an information notification apparatus having the following functions (a) to (e).

### (a) Function for obtaining area information

The user terminal includes: a GPS (position information service) position information obtainment unit, a short distance wireless communication unit for the Bluetooth, an infrared communication or the like; and a product tag information reading unit such as a bar code reader and an RF tag reader.

### (b) Input function

The user terminal is assumed to have an input unit for receiving user inputs.

In general, a keyboard, a mouse, a tablet or the like is used as an input unit.
The structures of them are generally known in a personal computer, a PDA or the like. Detailed descriptions of them will be omitted because they are not focused on in the present invention.

### (c) Output function

The user terminal is assumed to have an output unit for displaying information.
A liquid crystal display, a sound output or the like is used as an output unit.
The structures of them are generally known in a personal computer, a PDA or the like. Detailed descriptions of them will be omitted because they are not focused on in the present invention.

### (d) Function for communication via a network

The user terminal provides a function for communicating, via a network, with a communication system in the present invention.

### (e) Recording function

The user terminal has a recording unit for recording information. It is assumed that the recording unit is realized as: a non-volatile recording apparatus such as a hard disc and a removable disc; a RAM (Random Access Memory) or the like. However, the present invention is not limited to them.

As a user terminal which satisfies the above-described requirements, a PDA, a mobile phone, a mobile game machine, a note type PC or the like is assumed. However, it may be a terminal which is exclusive for an information notification service, and it is not limited to them.

It is also assumed that the communication system 100 which provides information notification services in the present invention includes: (a) an input function; (b) an output function; (c) a function for communicating via a network; and (d) a recording function. However, details of them are not essentials of the present invention, these functions are equivalent to the functions of the user terminal, and therefore, descriptions of these functions will be omitted.

Note that it is assumed that the network used in the present invention is a physical network such as the Ethernet (R), a network using an analog/digital public line or an analog/digital dedicated line, an ADSL (Asymmetric Digital Subscriber Line), a wireless LAN (Local Area Network). However, the application range of the present invention is not limited to them.

Also, as subordinate protocols of the network, the TCP/IP (Transmission Control Protocol/Internet Protocol) are widely used in the Internet. It is assumed that the present invention also uses the TCP/IP, however, such protocols are not limited to them.

Also, in the network assumed to be used in the present invention, each user is not necessarily connected to the network, each user's address information (the IP address, the port number etc.) which is necessary for communication are not fixed and thus they may be changed each time the network is connected.

In the present invention, the information notification services based on TPO information of plural users are realized by performing the following processes using the communication system 100 and the user terminal 109:
1. User registration;
2. Group generation;
3. Generation and registration of information notification rules;
4. Obtainment of TPO information;
5. Determination of information notification rules;
6. Execution of the information notification rules;
7. Obtainment of the execution results of the information notification rules; and
8. Change and cancel of the information notification rules.
The above procedure will be described below.

### (1. User registration)

A user who uses a TPO information notification service is required to register his or her TPO information in the user information management unit 104 of the communication system 100.

The TPO information to be registered includes the following (a) to (c).
<TPO information>

### (a) User ID

It is the information for uniquely identifying a user. It may be generated by either the communication system side or the terminal side. The user information management unit determines that the ID is unique in the system. Also, there is no restriction on the user ID format, but a UUID or a URI format is assumed to be used.

### (b) User profile

It relates to the individual information of a user, mainly to O (preference) among the TPO information used in the present information. Details of the user profile are assumed to be:
· Preference information;
· Behavior history;
· Schedule information; and
· Address information (the user terminal address, the user mail address or the like.

### (c) User area information

It relates to the current status of a user, mainly to T (time) and P (place) among the TPO information used in the present invention. Details of the user area information are assumed to be:
- Information of current position of the user; and
- Information of a product and a service available in the neighborhood of the user.

The generated TPO information is held by the user information management unit 104.
Also, the user terminal stores the user ID which is associated with itself.

### (2. Generation of a group)

In order to handle plural users all together, a concept of "group" is used. In the case where a group which is made up of plural users is newly generated in the communication system 100, the user who wants to generate a group registers the following information in the group information management unit 101 in the communication system.

### (a) Group ID

It is a value for uniquely identifying a group in the communication system of the present invention. A concrete format of a group ID is not prescribed in the present invention, but a UUID, a URI or the like is assumed to be used.

### (b) Group member information

It is the information for specifying a user who can participate in the group which is uniquely specified by the above-described Item (a). The following information is present in the group member information.
(b-1) Member list
It is realized as a list of: user IDs described in Item 1 concerning "User registration"); values for uniquely identifying respective user terminals (hereinafter referred to as terminal IDs); and terminal addresses. Users or user terminals included in this member list are handled as group members. Note that the method of obtaining user IDs is assumed to be (a) the method where the user information management unit 104 is used, or (b) the method where the user IDs of the users to be invited to the group are obtained directly from the users by mail or through conversation.
(b-2) Authentication information
It is the information of the authentication information to be owned by the terminals which can participate in the group or the information concerning the authentication information. It is not prescribed concretely in the present invention. However, it is a certificate and a password issued by a specific CA or the information concerning them. The users who have the certificate and the password or the information notification apparatuses are handled as the group members. A means which generates the above-described authentication information (the password, the certificate and the like) and distributes them to users is not prescribed in detail, however, in reality, there is a conceivable method where the user who has generated the group generates the above-described authentication information using the user terminal or the group management unit and notifies the users desired to be the group members of the authentication information by means of a unit such as mail.
(b-3) TPO information
It is the TPO information which is satisfied by the user terminals which can participate in the group. It is not concretely prescribed in the present invention. However, it is the information made up of specific position information (such as "in Kyoto city" and "in Tokyo dome"), specific preference information (such as "a fan of an artist" and "a fan of Hanshin Tigers") or the like. The users or the information notification apparatuses which satisfy these conditions are handled as the group members.
The above-described group member information becomes necessary at the time when the group determination unit 106 determines the group to which the user terminal belongs.

### (c) Generation of the description information concerning the group

It is the information for notifying the type of the generated group to users. For example, information such as "the group of Yamada family" and "the group of Tiger fans" is described. This information becomes necessary at the time when a user determines the group to which he or she belongs.

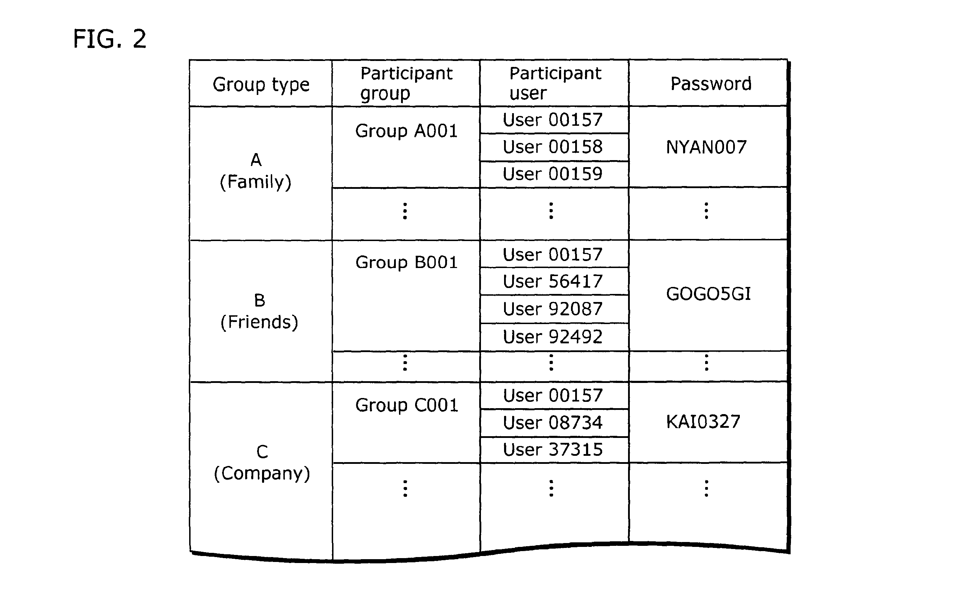

The information of the group made up of the above-described information (a) to (c) is managed by the group information management unit 101. FIG. 2 is a diagram showing an example of the registered group information which is managed by the group information management unit 101. Group types, participant group IDs, participant user IDs, passwords etc. are described in the group information shown by the figure. In the articles of group types, "family", "friend", "company" and the like are described. Also, in the articles of participant group IDs, the IDs of the respective groups which belong to the group types are listed. Further, in the articles of participant users, the IDs of the members who belong to the respective groups are described in association with the respective group IDs. In the articles of passwords, the respective passwords which are authentication information for each group are described.

According to the above-described procedure, a group is generated in the communication system in the present invention, and the information is managed by the group information management unit 101.
Note that all of the users and information notification apparatuses are not required to generate the respective groups for themselves.
Also, the execution order of the user registration step of the above-described Item 1 concerning "User registration" and this group generation process are not prescribed. Either of which may be executed first, and both of which may be executed at the same time.

### (3. Generation and registration of information notification rules)

A user who uses the information notification service in the present invention generates information notification rules through the rule generation unit 102.

The information notification rules are generated in order to prescribe the details and conditions of the information which is notified to the user, and include the following information.

### (a) Target of information notification

A target of information notification is specified in the case where information that causes the communication system to execute information notification to the user is obvious. Example information is "Milk is on sale nearby.", "The artist's CD is on sale nearby." and "The user enters a specific area.".

### (b) Conditions for information notification

Conditions for information notification are used when specifying a condition with which a user accepts information notification. Example conditions are "No information is notified at working time." and "No notification is executed concerning any products which cost 1000 yen or more.".

### (c) Details of information notification

In the case where a user has found a CD which the friend has been looking for, the user specifies the details of the information notification such as "sending the finding result to the friend's information notification apparatus" instead of displaying the information on the local terminal.

In this embodiment, the information distribution rules are realized by the earlier-described ECA rule. The ECA rule for describing the following is generated as an information notification rule. A target of information notification is described in the event part, a condition of information notification is described in the condition part, and details of information notification are described in the action part.

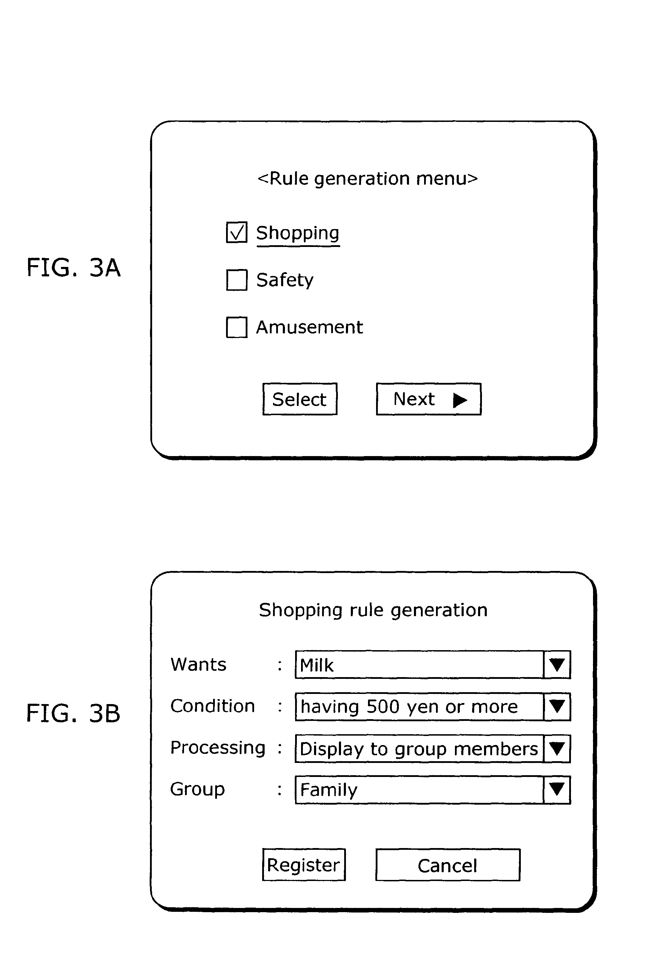

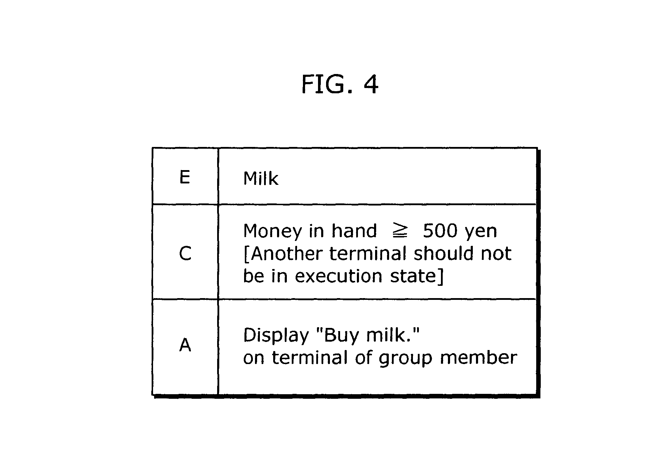

Also, at the time of generating the information notification rules in order to realize information notification services considering other user's TPO information, the group generated in the above-described Item 2 concerning "Group generation" can be used. FIG. 3A shows an example of a dialog screen to be displayed on the user terminal at the time when the rule generation unit 102 generates information notification rules. FIG. 3B shows an example of a dialog screen for asking the user whether or not the generated information notification rules can be registered or not. FIG. 4 shows a concrete example of an ECA rule in the case where the information notification rule shown in FIG. 3B is an ECA rule.

Information notification rules using groups are generated according to the following procedure of (i ) to (vii).
( i ) A user notifies the rule generation unit 102 of the user ID stored in the user terminal in the user registration step of Item 1 concerning "User registration".
( ii ) The rule generation unit notifies the group determination unit 106 of the notified user ID, and obtains the group information list GIL including the information of the group to which the user can belong.
( iii ) The rule generation unit notifies the obtained group information list GIL of the user terminal.
(iv) The user selects a group G whose members share the information notification rule which the user has generated from among the group information list GIL which the user has obtained.
( v ) The user obtains the information of other users who belong to the group G from among GI, and generates an information notification rule R using the (b) information notification conditions and (c) information notification details. For example, a user is encouraged to input into the dialog screen like shown in FIG. 3A and 3B, and an information notification rule like shown in FIG. 4 is generated. In this way, it is possible to describe an information notification rule defining that "In the case where there is a family member who has area information concerning "milk", the family member is encouraged to buy milk. Note that information is provided to only a member at one time.".
(vi) The user terminal notifies the rule generation unit of the information notification rule R and the group information GI of the group G in which the information rule R is shared.
(vii)The rule generation unit notifies the rule management unit 103 of the obtained information notification rule R and the group information GI of a group G. The rule management unit holds the information notification rule R as a shared rule of the group G.

According to this procedure, information notification is determined and executed using the TPO information of the group G members at the time when the information notification rule R is executed.

Note that the following methods are assumed as concrete generation methods of information notification rules;
(a) A user manually inputs an information notification rule through the input/output interface of the information notification apparatus; and
(b) The information notification apparatus has a function for generating a user profile or an information distribution rule automatically or semi-automatically.

### (4. Obtainment of TPO information)

The user terminal which uses the information notification service in the present information notifies, to the user information management unit 104 of the communication system 100, of the updated TPO information UI of the user together with the user ID which is held in the user terminal in the earlier-described Step 1 concerning "User registration" in the case where the user TPO information is changed.

At the time of detecting the change of the TPO information, the user terminal obtains area information of the user by means of (a) a wireless communication for short distance such as the Bluetooth and a wireless LAN, (b) a product tag reader such as an RFID reader and a bar code reader, (c) a GPS (position information service) or other means, and detects the change of the information of the time and the place.

Also, in the case where the user terminal obtains the user operation information and updates the user history information, and in the case where the user explicitly changes the user profile using an input function, the user terminal detects the update of the user profile.

The user information management unit which has received the updated TPO information UI and the user ID from the user terminal changes the TPO information corresponding to the held user ID, and further notifies the rule execution determination unit 105 of the TPO information UI and the user ID.

### (5. Determination of information notification rule)

On receiving the notification of the changed TPO information UI and user ID from the user information management unit 104, the rule execution determination unit 105 executes the following processes in order to select the information notification rule to be executed.

(a) The rule execution determination unit 105 causes the group determination unit 106 to determine the group to which the user corresponding to the notified user ID belongs, and generates the group list GL.
(b) As to each group included in the group list GL, it obtains the rule assembly RL of the shared information notification rules, from the rule management unit 103.
(c) For each group included in the group list GL, it determines whether there is a rule to be executed in the information notification rules included in the rule assembly RL of the information notification rule based on the TPO information of the group members.

In the case where an information notification rule is realized as an ECA rule, whether the action part should be executed is determined by checking the event part based on the changed TPO information and by checking the condition part based on the TPO information of all the group members.

In the case where it is determined that notification of an information notification rule R is to be executed, the rule execution determination unit notifies the rule execution unit 107 of the rule R and the TPO information which is necessary for executing the rule R.

Also, the rule execution determination unit sets the execution information of the information notification rule R as "execution state".

Also, in the case where the information notification rule R, which has been determined as the rule to be executed by the rule execution determination unit, is currently "in an execution state" or "in a waiting state", the rule R is not instantaneously executed, but the rule R and information DI which is necessary for executing the rule R are stored in the execution waiting queue which is held by the rule execution determination unit.

In the case where the execution state of the information notification rule R is cancelled later on or in another case, the rule R and information DI which are stored in the execution waiting queue are notified to the rule execution unit, and the rule execution determination unit holds the execution status of the R as "execution state".

### (6. Execution of an information notification rule)

The rule execution unit 107 generates information of a product, a service or the like which is notified to the user. The rule execution unit in this embodiment generates the information to be notified based on the TPO information of group members according to the description of the information notification rule R which has been notified by the rule execution determination unit 105.

Note that the details and the format of the information to be generated by the rule execution unit 107 are not prescribed concretely in the present invention, but file formats of HTML, PDF, XML and the like are assumed.

After generating the information to be notified to a user, the rule execution unit 107 determines the user terminal to which the information is notified based on the description of the information notification rule, and notifies the user terminal of the generated information.

Note that, in order to notify information, the rule execution unit 107 sends the information to the user terminal using information such as:
· The user address information which is described in the TPO information; and
· The address information which is described in the information notification rule.

The rule execution unit generates the information to the user. In the case where it succeeds in sending the information, it notifies the rule execution determination unit of the notification of a normal end of the information notification rule R. In the case where it fails to generate or send the information to the user, it notifies the rule execution determination unit of the notification of an abnormal end.

In the case where the rule execution determination unit receives the notification of a normal end of the information notification rule R from the rule execution unit, it executes one of the following processes according to the details of the information notification rule R:
· Changing the execution state of the information notification rule R into "waiting state"; and
· Cancel the information of the execution status of the information notification rule R.

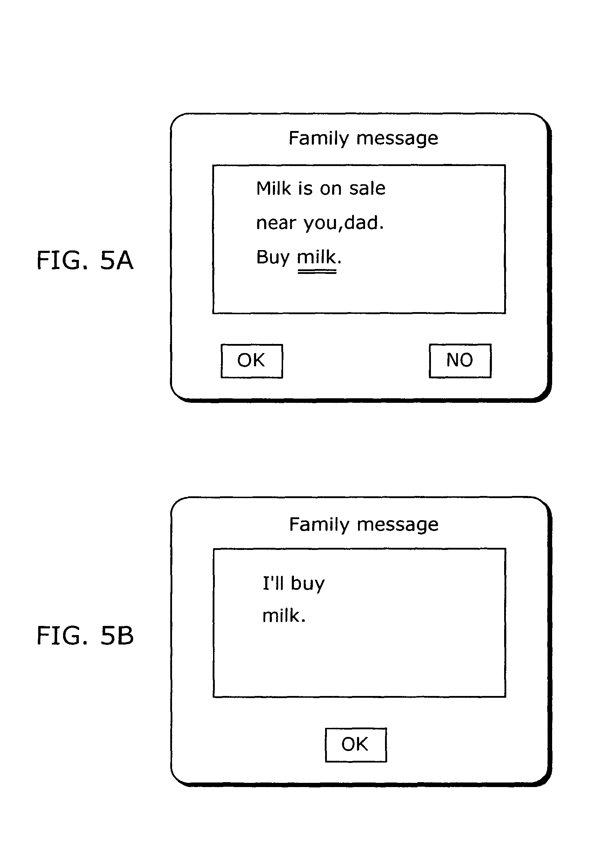

Here is an example of information notification rule defining that "Among family members, a member who is present near the area where milk is on sale is encouraged to buy milk, however, notification is executed only to a member at one time.". Due to the presence of the condition that "Notification is executed only to a member at one time.", in the case where the information notification of the information notification rule is notified in a normal manner, "waiting state" is kept for a certain time period until the behavior of the user who accepted the information notification is fed back. FIG. 5A and 5B each shows an example of the information which is notified to each member of the group. As shown in FIG. 5A, on the user terminal of "the father" who is a member of the group and is present near the area where milk is on sale, the information encouraging the father to buy milk is notified. In this case, note that the user (such as the mother among the family members) who has generated this information notification rule may be asked whether the encouragement information is notified or not before the information encouraging the father to buy milk is notified to the father's terminal.
Also, in the case where the abnormal end information of the information notification rule R has been received, the execution status of the information notification rule R is held as an abnormal end.

As to the information notification rule R in the case where such an abnormal end is notified, the following processes are assumed:
(a) The rule execution determination unit tries to execute the rule one more time;
(b) Notification to the person who has made the rule is executed; and
(c) Details of the countermeasure to the abnormal end which is held by the information notification rule R is executed.

### (7. Obtainment of the result of the information notification rule)

The user terminal which uses the communication system of the present invention obtains a user behavior such as "I have just bought milk." and "I have just bought a CD." in response to the notified information, and notifies such information to the feedback collection unit 108. Also, as shown in FIG. 5A, an "OK" button and a "NO" button are displayed on the father's terminal, one of these buttons receiving an input for indicating whether the father actually buys milk or not in response to the displayed notification. In the case where the father has pressed the "OK" button, the father's terminal notifies the behavior of "buying milk" to the feedback collection unit 108 of the communication system. Also, as shown in FIG. 5B, the information indicating that "The father will buy milk" is notified to other family members. In the case where the father has pressed the "NO" button, the father's terminal notifies the behavior of "not buying milk" to the feedback collection unit 108 of the communication system. Note that father's behavior is notified to the feedback collection unit 108 by the father pressing the "OK" button or the "NO" button, but how to determine a behavior is not limited to this. It may be determined by detecting the data related to the notified information. For example, whether the father has bought milk or not may be determined by detecting the change in the electronic purse balance charged at father's terminal, and the information is notified to the feedback collection unit 108. Also, whether the father has bought milk or not may be determined by detecting an electronic tag attached to the package of milk.
The obtained user behavior information is notified to the rule execution determination unit 103.

Also, it is possible to determine that no milk has been bought in the case where no input from the feedback obtainment unit is obtained within a certain time period in response to the result in the execution step of the information notification rule in the above-described Item 6 concerning "Execution of the information notification rule".

### (8. Change and cancel of an information notification rule)

In the case where the obtained user behavior information is inputted to the rule management unit 103 through the feedback collection unit 108 in the above-described Item 7 concerning "Obtainment of the result of an information notification rule", the rule management unit changes or cancels, as the need arises, the user profile or the information notification rule which is held by the unit itself.

More specifically, in the case where the information indicating the behavior of "buying milk" is obtained, the information notification rule defining that "Notification is made in the case where milk is on sale nearby." is cancelled, the information notification rule being made for the group to which the user belongs.

Also, in the case where the rule management unit has not changed or cancelled the information notification rule R and the rule execution determination unit 105 determines that the execution status of the information notification rule R is "waiting state", it is determined that the rule has been executed, and the rule execution determination unit cancels the execution status of the information notification rule R.

At this time, in the case where next information notification rule R is stored in the execution waiting queue of the rule execution determination unit, the information notification rule R and the information DI which is necessary for executing the information notification rule R are notified to the rule execution unit, and the rule execution determination unit holds the execution status information of the information notification rule R as "execution state".

Executing the above-described procedure makes it possible to realize the information notification service based on the TPO information of plural users in the present invention.

The flow of the following processes will be described in detail with reference to a diagram and an example.
1. Registration of an information notification rule
2. Determination of an information notification rule
3. Execution of an information notification rule

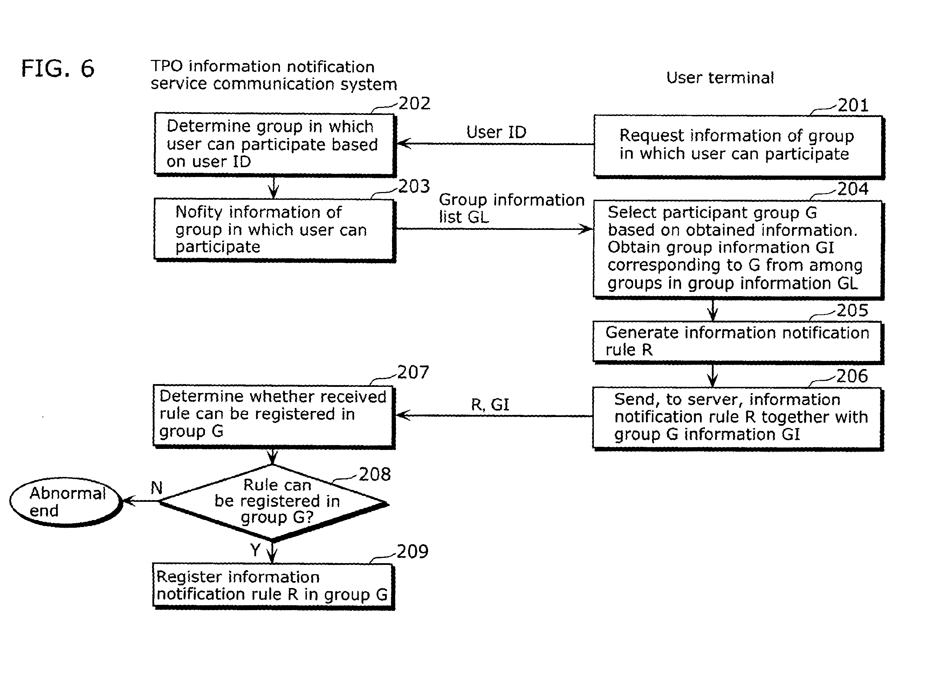

FIG. 6 is a flow chart showing the flow of the generation and registration of the information notification rule. The flow of the generation and registration of the information notification rule will be described in detail with reference to FIG. 1 and FIG. 6.

The rule generation unit 102 which has received a request from a user sends the user ID to the group information management unit 101. The group management unit 101 determines the group in which the user participate using the group determination unit 106 and generates a group list GL of the group (Step 202)

The rule generation unit obtains the group list GL from the group information management unit 101 and sends it to the user (Step 203).

The user determines a group G whose members share the generated information notification rule R among the groups which are listed in the group list GL obtained from the user and extracts the group information GI from the group list GL (Step 204).

The user generates the information notification rule R for using the TPO information of the other members in the group G based on the information included in the group information GI (Step 205). An example information notification rule R is "Notification to the user who has generated the rule is executed in the case where anyone of the members of the group G is present nearby the area where the artist's CD is on sale.".

The user terminal notifies the generated information notification rule R and the shared group information GI to the rule generation unit 102 (Step 206).

The rule generation unit 102 notifies the group information GI and the information notification rule R to the rule management unit 103 (Step 207).

The rule management unit 103 determines whether the information notification rule R can be registered or not to the group G (Step 208).

The present invention does not prescribe a concrete method for determination, but it is assumed that the following information and the like are checked:
· Validity of an information notification rule R; and
· Competition with other information notification rules which are registered in the group G.

In the case where the information notification rule R cannot be registered to the group G, the process is completed (208: No). In the other case (208: Yes), the process of Step 209 will be executed (Step 209).

The rule management unit 103 holds the information notification rule R with reference to the group G.
Through Steps 201 to 209 which have been described up to this point, the information notification rule is shared among all the users who belong to the group G which has been selected by the user.

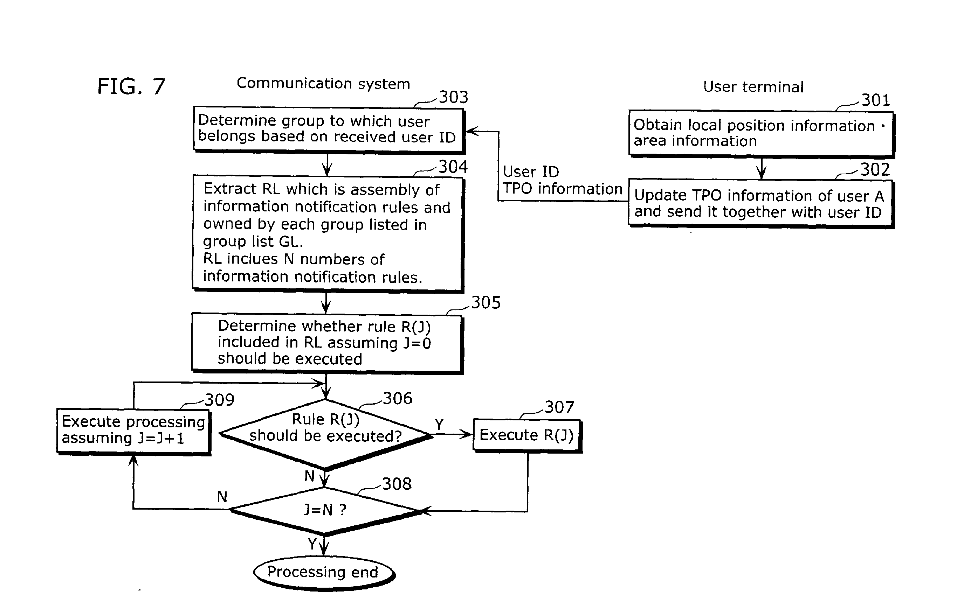

FIG. 7 is a flow chart showing the flow of the processes of Item 4 concerning "Obtainment of TPO information" and Item 5 concerning "Determination of an information notification rule".

The flow from the obtainment of TPO information to the execution of the information notification rule will be described below in detail with reference to FIG. 1 to FIG. 7.

The user terminal obtains the area information by means of a GPS or a wireless communication for short distance and updates the self TPO information (Step 301).

The user terminal sends the updated TPO information and the user ID to the user information management unit 104 (Step 302).

The user information management unit 104 updates the managed user TPO information using the received user ID and TPO information. Also, the received user ID and TPO information are notified to the rule execution determination unit 105. The rule execution determination unit notifies the group determination unit 106 of the user ID and asks the group determination unit 106 about the group to which the user belongs. The group determination unit generates a group list GL of the group to which the asked user belongs and executes the notification (Step 303).

The rule execution determination unit 105 obtains, from the rule management unit 103, a rule assembly RL of the information notification rules owned by the groups which are listed in the obtained group list GL. It is assumed that the rule assembly RL includes n numbers of information notification rules, and each of the rules is represented as information notification rule R(J) (J=0 to N) (Step 304).

The rule execution determination unit 105 executes the following process of each information notification rule R(J) assuming that J=0 (Step 305).

The rule execution determination unit determines whether each information notification rule R(J) should be executed or not based on ( i ) the TPO information which is shared among group members and ( ii ) the execution status of the information notification rule R(J) which is held by the rule execution determination unit (Step 306). In the case where the information notification rule R(J) should be executed, the process of Step 307 is executed. In the other case, the process of Step 308 is executed (Step 307).

The rule execution determination unit 105 notifies the rule execution unit 107 of: the information notification rule R(J); and the TPO information of the group members which is necessary for executing the information notification rule R(J), and requests the execution of the information notification rule R(J). Also, it holds the execution status of the information notification rule R(J) as "execution state". Also, in the case where the execution status of the information notification rule R(J) has already been in an "execution state" or in a "waiting state", it adds the information notification rule R(J) and the information necessary for executing the information notification rule R(J) to the execution waiting queue which is held by the rule execution determination unit 105 (Step 308).

The rule execution determination unit determines whether or not all the information notification rules R(J) which are included in the rule assembly RL obtained in Step 304 have been executed (Step 309). In the case where J=N, the process is completed. In the other case, the process of Step 309 will be executed.

Assuming that J=J+1, the process of Step 307 and the following processes are continued.
As described above, with the execution of the processes of Steps 301 to 309 determines the information notification rule to be executed based on user TPO information.

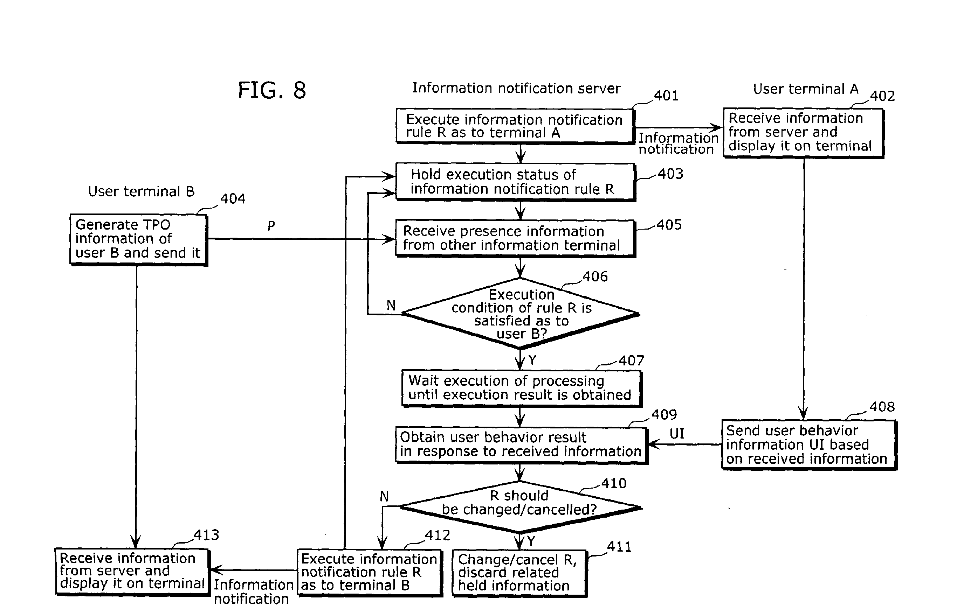

FIG. 8 is a flow chart showing the flow of Item 6 concerning "Execution of an information notification rule", Item 7 concerning "Obtainment of the information notification rule" and Item 8 concerning "Change and cancel of the information notification rule".

The flow of the processes from the execution to the completion of the information notification rule will be described below with reference to FIG. 1 to FIG. 8.

Also, the details of the information notification rule R to be executed in this example is assumed that "In the case where a member has TPO information concerning milk, the member is encouraged to buy milk, however, the information is notified to only a member at one time.".

The rule execution unit 107 of the communication system 100 executes the information notification rule R and generates the information notified to the user. Also, the rule execution unit determines the user A to which the generated information is notified based on the details of the information notification rule R and notifies the information to the terminal (Step 401). Also, it notifies the rule execution determination unit of the execution result (a normal end or an abnormal end) of the information notification rule R. In this case, the information is notified to the user terminal in a normal manner, and therefore, the information indicating that "The R is ended normally." is notified to the rule execution determination unit.

The user terminal A receives the information from the communication system and presents the information to the user by means of the local output function (Step 402).

The execution determination unit holds the execution results of the information notification rule R which has been notified by the rule execution unit. Also, in the case where the notified information is ended normally, whether a feedback should be received or not is determined based on the details of the information notification rule R. In this example, there is a need to obtain the feedback as to whether or not the user who received the information has bought milk in order to restrict, to 1, the number of users who receive the information notification. Therefore, the execution status of the information notification rule R is held as "waiting state" (Step 403).

A user B who is different from the user who received the information notification in Step 402 updates the TPO information and sends the updated information to the communication system 100 (Step 404).

The communication system obtains the user B's TPO information notified in Step 404 and determines the information notification rule to be executed by means of the rule execution determination unit 105 (Step 405).

The execution status, in the execution determination unit, of the information notification rule which has been determined as the rule to be executed in Step 405 is checked (Step 406). In the case where the execution status is "execution state" or "waiting state", the process of Step 407 and the following processes of the rule will be executed (406: Yes). In the other case, the rule is notified to the rule execution unit in order to request the rule execution unit for the execution of the rule. In this case, Step 407 is executed because the rule R is in a "waiting state".

As to the information notification rule which is currently in an "execution state" or in a "waiting state", the rule execution determination unit 105 holds the information notification rule R and the information DI which is necessary for executing the rule R in the execution waiting queue (Step 407).

The user terminal obtains a user behavior in response to the information which has been notified in Step 402 and notifies the feedback on the behavior to the feedback collection unit 108. In this case, the user behavior information UI indicating "No milk has been bought." is obtained using the above-described method or the like, and the user behavior information UI and the corresponding rule R are notified to the feedback unit (Step 408).

The feedback collection unit 108 notifies the rule management unit 103 of the received user behavior information through the rule execution determination unit 105 (Step 409).

The rule management unit 103 determines whether or not the information notification rule R for the group to which the user belongs should be cancelled or changed based on the obtained user behavior information (Step 410). Here is an example case of the information notification rule defining that "A family member who is present near the area where milk is on sale is encouraged to buy milk. Note that notification is executed only to a member at one time". In the case where the behavior information indicating "Milk has been bought." is obtained, the process of Step 411 is executed in order to cancel the rule R. In the other case, the process of Step 412 is executed in order not to change the rule R.

The rule management unit 103 changes and cancels the details of the rule R. Also, the details of the execution waiting queue concerning the rule R and the execution status of the rule R are cancelled, the details being held by the rule execution determination unit 105 (Step 411).

In the case where the rule management unit 103 does not change or cancel the details of the rule R, the rule execution management unit 105 extracts the information notification rule R and the information DI which is necessary for executing the rule R from among the execution waiting queue and notifies the information to the rule execution unit 107. Also, the rule execution unit determines the execution status of the rule R as "execution state" again. In the case where no information notification rule R is included in the execution waiting queue, the rule execution determination unit 105 (the rule execution management unit) cancels the information concerning the execution status of the rule R and completes the processing of the rule R (Step 412).

The user terminal B receives the information from the communication system and presents the information to the user by means of the local output function (Step 413).

Executing the above-described Steps 401 to 413 makes it possible to execute the information notification rule R which is shared among the group members.

Also, the communication terminal further includes an input unit for receiving inputs from the terminal user. In general, a keyboard, a mouse, a tablet or the like is used as an input unit. Their structures are generally known as computers, and they are not focused on in the present invention, and thus detailed descriptions on them will be omitted.

Note that the term "user" to be used hereinafter is a concept including the communication terminal and the terminal user.

Also, the communication terminal includes a memory unit for memorizing information. It is assumed that a non-volatile memory device such as a hard disc and a removable disc, a RAM (Random Access Memory) or the like is used, however, such a memory device is not limited to them in the present invention.

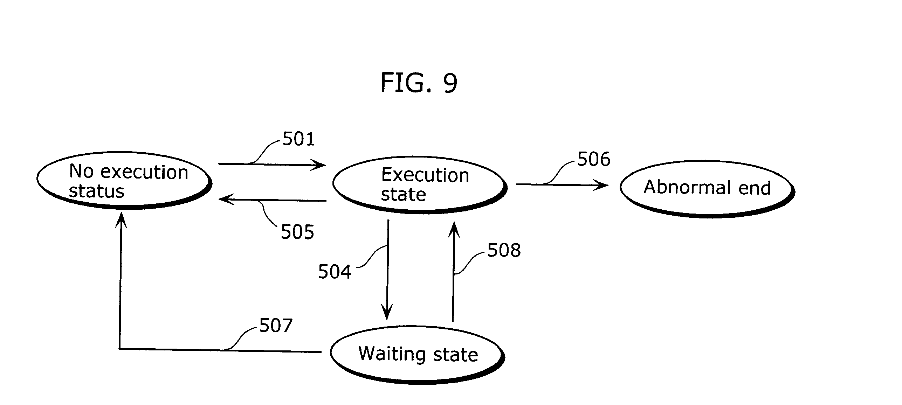

FIG. 9 is a state-transition diagram of the execution of an information notification rule which changes depending on determination by the rule execution determination unit 105. The example case where the rule execution determination unit 105 manages the execution status of the information notification rule is realized by executing the steps of the following procedure (a) to (f).

Also, FIG. 9 shows the execution status of each rule at this time.

(a) In the case where the information of the information notification rule R, which has been determined as the rule to be executed by the rule execution determination unit, is not held by the current rule execution unit, the rule execution determination unit notifies the rule R and the information which is necessary for executing the rule R to the rule execution unit, and then holds the execution status of the information notification rule R as "execution state" (501 in FIG. 9)

(b) In the case where: the information of the information notification rule R, which has been determined as the rule to be executed by the rule execution determination unit, is held by the current rule execution unit; and the execution status of the rule R is "execution state" or "waiting state", the rule execution determination unit stores the rule R and the information necessary for executing the rule R in the execution waiting queue (each state is continued).

(c) After completing the information notification processes to the user based on the information execution determination unit which has been notified by the rule execution determination unit, the rule execution unit notifies the rule execution determination unit of a normal end in response to the executed information notification rule. Also, in the case where the information notification rule was not able to be executed in a normal manner, it notifies the rule execution determination unit of an abnormal end in response to the executed information notification rule.

(d) In the case where the rule execution determination unit has received a normal end notification from the rule execution unit, it executes one of the following processes d-1 to d-3.
(d-1) It checks the details of the information notification rule and changes the execution status of the information notification rule to "waiting state" as the need arises.
These processes are used in the case where the communication system includes the later-described feedback obtainment unit. These processes are executed to realize the process that the information notification rule R is not executed to the other users until a user behavior (such as "Milk has been bought." and "Milk has not been bought.") can be obtained in response to the information notification(504 in FIG. 9).
(d-2) It cancels the execution status of the information notification rule.
In the case where the normal end notification of the information notification rule R has been received and the rule R is not included in the execution waiting queue for the rule execution determination unit (for example, in the case where the details of the notified information has been completed by the notified user behavior), the execution status information of the rule R is cancelled (505 in FIG. 9).
(d-3) It executes the information notification rule included in the execution waiting queue.
In the case where the normal end notification of the information notification rule R has been received and the rule R is included in the execution waiting queue for the rule execution determination unit, the execution status information of the rule R is made into an "execution state", the rule R and the information necessary for executing the rule R are extracted to be notified to the rule execution unit (502 in FIG. 9).

(e) As to the abnormal end notification of the information notification rule which has been received, the execution status of the rule R is made into an "abnormal end". Also, it notifies the information to the rule management unit and makes the rule management unit hold the information (506 in FIG. 9).

(f) In the case where it has received the information notification from the later-described feedback unit, the rule execution determination unit executes one of the following processes f-1 and f-2.
(f-1) In the case where the information notification rule R is not included in the execution waiting queue for the rule execution determination unit, it cancels the execution status information of the rule R (507 in FIG. 9).
(f-2) In the case where the information notification rule R is included in the execution waiting queue for the rule execution determination unit, it makes the execution status of the rule R into "execution state", extracts the rule R and the information necessary for executing the rule R, and notifies them to the rule execution unit (508 in FIG. 9).

Managing the execution status of the information notification rule by executing the above-described processes makes it possible to control the execution of, for example, the information notification rule which must not be executed to plural users at one time.

### (Second Embodiment)

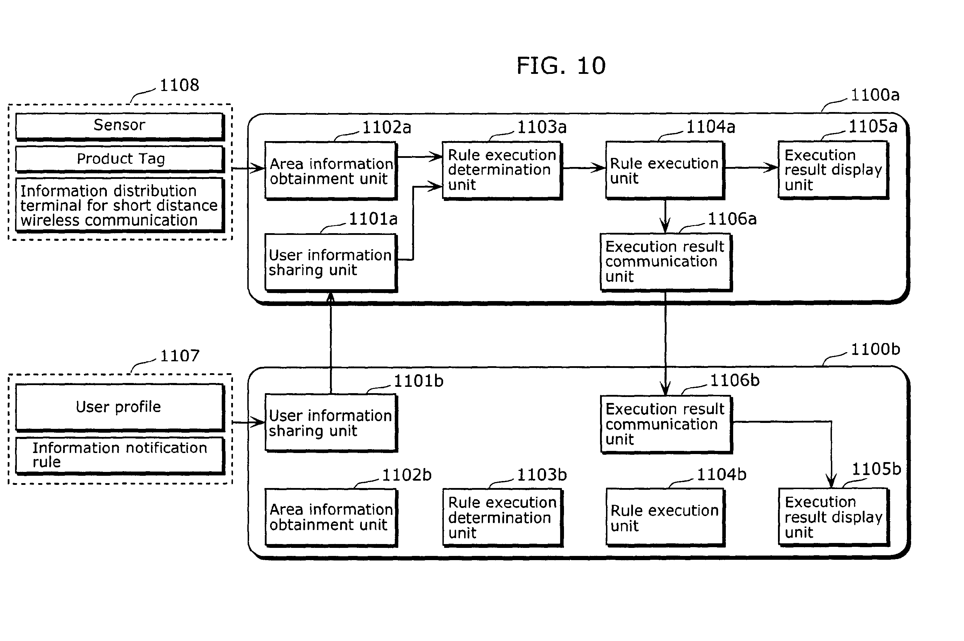

FIG. 10 shows a communication terminal in the second embodiment of the present invention and the configuration of the communication system including the communication terminal. The communication system of the second embodiment is the communication system including plural P2P communication terminals. The communication terminals 1100a and 1100b are the communication terminals of the present invention, and respectively include: user information sharing units 1101a and 1101b; area information obtainment units 1102a and 1102b; rule execution determination units 1103a and 1103b; rule execution units 1104a and 1104b; execution result display units 1105a and 1105b; and execution result communication units 1106a and 1106b.

Note that the "rule holding unit" in Claim 1 corresponds to the user information sharing units 1101a and 1101b, and the rule execution determination units 1103a and 1103b. The "information notification unit" corresponds to the rule execution determination units 1104a and 1104b, the execution result display units 1105a and 1105b, and the execution result communication units 1106a and 1106b. Also, the "group determination unit" in Claim 2 corresponds to the user information sharing units 1101a and 1101b in FIG. 10. The "rule generation unit" in Claim 4 is not shown in FIG. 10. Further, the "behavior determination unit" in Claim 6 corresponds to the execution result communication units 1106a and 1106b, and the execution result display units 1105a and 1105b.

In the present embodiment, each of the terminals has the above-described structure executes the following processes. This makes it possible to realize the TPO information notification service based on the TPO information of plural users.

(1) Generation of a user profile and an information notification rule.
(2) Sharing of a user profile and an information notification rule.
(3) Obtainment of an area status.
(4) Determination of an information notification rule.
(5) Execution of the information notification rule.
(6) Notification of the execution result of the information notification rule.
(7) Display of the execution result of the information notification rule.

Each process will be described below.

### (1. Generation of a user profile and an information notification rule)

A user who uses the TPO information notification service generates a user profile or an information notification rule in order to receive information notification. The user profile relates to the user who owns a terminal, and includes preference information and a behavior history. The information notification service automatically selects a product or a service which is suitable for the user from among products and services based on the information, and notifies the result to the user. The information notification rule is generated at the time when the user prescribes the details of the information notification, and includes the following information.

### (a) Target of information notification

Target of information notification is specified in the case where the information which triggers information notification is obvious. Example information is "Milk is on sale nearby.", "The artist's CD is on sale in the neighborhood." and "The user enters a specific area.".

### (b) Conditions for information notification

Conditions for information notification are used when specifying a condition with which a user accepts information notification. Example conditions are "No information is notified at working time." and "No notification is executed concerning any products which cost 1000 yen or more.".

### (c) Details of information notification

In the case where a user has found a CD which the friend has been looking for, the user specifies the details of the information notification such as "sending the finding result to the friend's information notification apparatus" instead of displaying the information on the local terminal.

In this embodiment, the information distribution rules are realized by the earlier-described ECA rules. Such ECA rules for describing the following are generated as information notification rules. A target of information notification is described in the event part, a condition of information notification is described in the condition part, and the details of the information notification are described in the action part.

The present invention does not prescribe a concrete method for generating a user profile and an information notification rule, but the following method is assumed:
(a) A user manually inputs them through the input/output interface installed in the communication terminal; and
(b) The terminal has a function for generating a user profile or an information distribution rule automatically or semi-automatically.

The user profile and the information notification rule which have been generated by the user of the communication terminal A1100a are held by the user terminal sharing unit 1101a.

### (2. Sharing of the user profile and the information notification rule)

The user who wants to share the TPO information with the other users shares the user profile and the information notification rule with the communication terminals of the users with whom the user desires to share the information.

In the case where the user of the communication terminal B1100b wants to share the above-described information with the user of the communication terminal A1100a, the user of the communication terminal B1100b specifies the address information (such as the IP address and the port number) of the communication terminal A1100a.

The following methods are assumed as the method for obtaining address information, but the method is not limited to them in the present invention:
(a) The user of the communication terminal B1100b directly inputs the address information of the communication terminal A1100a by means of the input interface which is installed in the communication terminal B1100b;
(b) The communication terminal B1100b asks the server which manages the address information of the communication terminal about the address of the communication terminal A1100a; and
(c) The communication terminal B1100b asks the whole network about the address of the communication terminal A1100a.

After specifying the address of the communication terminal A1100a with which the TPO information is shared, the communication terminal B1100b sends the user profile and the information notification rule which are stored in the local user information unit 1101b to the communication terminal A through a network, and the communication terminal A1100a holds the information received from the local user information sharing unit 1101a.

### (3. Obtainment of area status)

The communication terminal A1100a stores its own or another terminal's user profile and information notification rule in the user information sharing unit 1101a, and collects, for example, the information of the product or the service which is the target of the information notification or the position information which becomes the execution rule of the information notification rule and the like.

The present information does not prescribe a concrete realization method for collecting area information and the format of the obtainable information, but the following methods for obtaining area information are assumed:
(a) A wireless communication for short distance such as the Bluetooth and a wireless LAN;
(b) A product tag reader such as an RFID reader and a bar code reader;
(c) A GPS (position information service); and other means.

### (4. Determination of an information notification rule)

When area information is obtained by the area information obtainment unit 1102a, the communication terminal A1100a determines which information notification should be executed by the rule execution determination unit 1103a.

The following two types of determination are executed by the rule execution determination unit in this embodiment.

### (a) Determination of conformity to the user profile

In the case where the information of a product or a service has been obtained by the area information obtainment unit 1102a, the rule execution determination unit 1103a determines whether there is a user to whom the information should be notified as to the user profile which is held by the user information sharing unit 1101a.
In the case where the made judgment as to the user profile is that information notification should be executed, it notifies the rule execution unit 1104a of the user profile and the area information.

### (b) Determination of conformity to the description details of the information notification rule

The rule execution determination unit 1103a determines whether a rule to be executed is included among the information notification rules which are held by the user information management unit 1101a based on the area information which has been obtained by the area information obtainment unit 1102a and the user profile which is held by the user information management unit 1101a.

In the case where the information notification rule is realized as an ECA rule, it determines whether the action part should be executed or not by checking the event part based on area information and checking the condition part based on area information and a user profile. In the case where the made judgment concerning an information notification rule is that information notification should be executed, the rule execution determination unit notifies the rule execution unit 1104a of the rule, and the user profile and the area information which are necessary for executing the rule.

### (5. Execution of the information notification rule)

The rule execution unit 1104a of the communication terminal A1100a which executes the information notification service generates information of, for example, a product or a service which is notified to the user.

The operations of the rule execution unit 1104a in the embodiment are classified into the following two types depending on the information to be sent by the rule execution determination unit 1103a.

(a) In the case where a user profile and area information are sent by the rule execution determination unit 1103a, the rule execution unit automatically performs selection, generation and change of the information which should be notified to the user based on the sent user profile and the area information. This feature is the information notification service whose style is the same as the style of the information recommendation service based on the user profile which is generally provided through Web sites.

(b) In the case where an information notification rule, a user profile and area information are sent by the rule execution determination unit, the rule execution unit generates the information which should be notified based on the user profile and the area information according to the description of the rule.

Note that the present invention does not specifically prescribe the details of the information to be generated by the rule execution unit and the format, but an HTML, a PDF, an XML and the like are assumed formats.

In the case where the user profile which has been used for rule execution corresponds to the user of another terminal in the above case (a) or in the case where the information notification rule which has been used for rule execution includes the description of sending the result to another terminal, the rule execution unit notifies the information to the execution result communication unit 1106a after generating the information to be notified to the user. In the case where there is no need to send the information to another communication terminal, it notifies the generated information to the local execution result display unit 1105a.

### (6) Notification of the execution result of the information notification rule

In the case where the information generated by the rule execution unit 1104a of the communication terminal A1100a should be notified to the user of another communication terminal B1100b, the execution result communication unit 1106a sends the information generated by the rule execution unit.

In the case where the user of the communication terminal A1100a executes information notification to the user of the communication terminal B1100b, the user of the communication terminal A1100a specifies the address information (such as the IP address and the port number) of the communication terminal B1100b.

The following methods are assumed as the methods for obtaining address information, but the coverage of the present invention is not limited by the methods:
(a) The user of the communication terminal A1100a directly inputs the address information of the communication terminal B1100b by means of the input interface which is installed in the communication terminal A;
(b) The communication terminal A1100a asks the server which manages the address information of the communication terminal about the address of the communication terminal B1100b; and
(c) The communication terminal A1100a asks the whole network about the address of the communication terminal B1100b;
(d) The address of the notification destination described in the information notification rule which has been executed by the communication terminal A1100a is used; and
(e) The address of the user B's terminal described inside the user B's file which is managed by the user information sharing unit 1101a is used.
The information obtained by the execution result communication unit 1106b of the communication terminal B1100b is notified to the execution result display unit 1105b.

### (7. Display of the execution result of the information notification rule)

The execution result display unit 1105a which is installed by the communication terminal A1100a of the present invention displays the information which has been notified by the rule execution unit 1104a or the execution result communication unit 1106a by means of the output interface which is installed in the communication terminal.

Executing the above-described processes using the communication terminal and the communication system of the present invention makes it possible to realize the information notification service based on the TPO information of plural users.

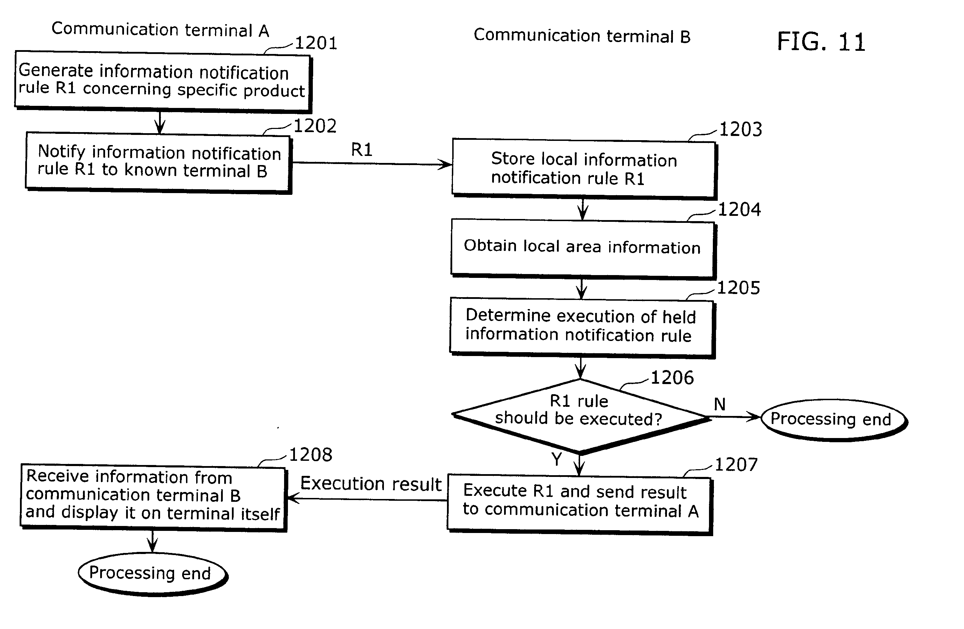

FIG. 11 shows the flow between the two communication terminals 1100a and 1100b which are shown in FIG. 10. The information is the information of a product (an artist's CD) which is desired by the user of the communication terminal B1100b. The information is detected by the user of the communication terminal A1100a in his or her neighborhood, and is notified to the communication terminal B1100b.

The execution example of the TPO information notification service will be described below in detail with reference to FIG. 10 and FIG. 11.

The user of the communication terminal B1100b generates the rule R1107 of the desired product and inputs the rule in the user information sharing unit 1101b (Step 201), the example of rule R1107 being "In the case where you finds a CD of artist A in your neighborhood, notify the information to the communication terminal B".

The communication terminal B1100b sends the rule R which has been inputted in Step 201 to the user information sharing unit 1101a of another communication terminal A1100a using the local user information sharing unit 1101b. Note that the address information of the communication terminal A1100a (such as the IP address and the port number) is necessary in order to send the information to the communication terminal A1100a, but the unit which obtains the address information is not specifically limited here (Step 202).

The communication terminal A1100a stores the rule R which has been sent by the communication terminal B1100b in the local user information sharing unit 1101a (Step 203).

The communication terminal A1100a obtains area information from the adjacent information terminal 1108 using the area information obtainment unit 1102a (Step 204). The adjacent information terminal 1108 is, for example, a sensor, a product tag, an information distribution terminal for a short distance wireless communication or the like.

The rule execution determination unit 1103a of the communication terminal A1100a determines how to execute information notification based on the information stored in the user information sharing unit 1101a and the area information obtained by the area information obtainment unit 1102a (Step 205).

Here, as also to the rule R which has been obtained in Step 203, whether or not the information notification rule should be executed based on the rule R is determined (Step 206). In this example case, in the case where the area information of the communication terminal A1100a includes the information indicating that there is "a CD of artist A", the rule execution determination unit 1103a executes the information notification rule based on the rule R (206: Yes). In the other case, the information notification based on the rule R is not executed (206: No).

The rule execution unit 1104a executes the information notification process based on the rule R (Step 207). In this example case, the information indicating "There is a CD desired by terminal B in the neighborhood of terminal A" is generated, and the information is sent to the communication terminal B1100b by means of the execution result communication unit 1106a.

The communication terminal B1100b obtains the information from the communication terminal A1100a by means of the execution result communication unit 1106b, and displays the details of the information to the user of the terminal by means of the execution result display unit 1105b (Step 208).

This process enables the user of the communication terminal B1100b to search not only his or her neighborhood but also the neighborhood of another terminal for the product that he or she is looking for. Also, in the case where the address of the communication terminal B1100b is stored in the terminal A, it becomes possible to make a request for the purchase of the product or take another action.

### (Third Embodiment)

The second embodiment does not specifically prescribe the other terminals with which each of the communication terminals share information, but it is desirable that the target be limited to a group made up of specific users such as family members or friends, the group members sharing the information concerning privacy such as a user profile.

The following is the definition of "group" in this specification:
(1) A group is made up of one or more users;
(2) A user can belong to plural groups;
(3) A group members have shared information which is unique to the group; and
(4) Shared information of a group can be communicated among the members who belong to the group, the conceivable members who constitute the group are friends, family members, hobby friends and users in a specific area.

The use of the concept of "group" provides the following merits:
(a) It becomes possible to clearly define the coverage within which a user profile and an information notification rule are shared; and
(b) Specifying a group makes it possible to share information among plural users, which simplifies the operation.

Also, the processes of the TPO information notification service are completed at the time when the information notification is executed in the second embodiment. However, in the case where an information notification rule is shared among many people, it is desirable that the result of each user's behavior in response to the notified information is obtained and reflected on the shared information notification rule.

Here is an example case where the information notification rule defining that "A group member who is present nearby the area where milk is on sale should notify the information." is shared among family members. In many cases, it is a waste to keep notifying the information indicating that "Milk is on sale in your neighborhood." to the family members who belong to the group after a family member has bought milk.

In this case, it is desired to realize the process such as canceling the information notification rule defining that "A group member who is present nearby the area where milk is on sale should notify the information." from all of the family member's terminals at the time when the user's behavior result that "Milk has been bought." is obtained.

In order to satisfy the above-described demand in the second embodiment of the present invention, a group management unit for handling the concept of "group" and a feedback obtainment unit for obtaining a behavior result are introduced in the communication terminals shown in the first embodiment.

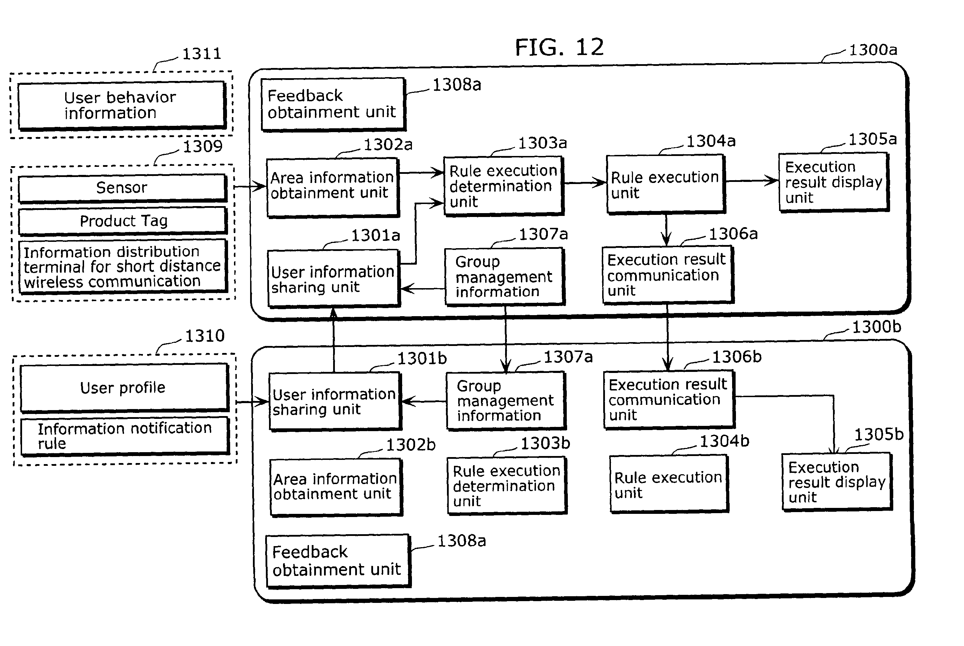

FIG. 12 shows the communication terminal and the configuration of the communication system including the communication terminal in the second embodiment of the present invention. The communication terminals 1300a and 1300b are the communication terminals of the present invention, and respectively include: user information sharing units 1301a and 1301b; area information obtainment units 1302a and 1302b; rule execution determination units 1303a and 1303b; rule execution units 1304a and 1304b; execution result display units 1305a and 1305b; execution result communication units 1306a and 1306b; group management units 1307a and 1307b; and feedback obtainment units 1308a and 1308b.

Note that the "rule holding unit" in Claim 1 corresponds to the user information sharing units 1301a and 1301b. The "information notification unit" corresponds to the rule execution determination unit 1303a and 1303b and the rule execution units 1304a and 1304b. Also, the "group determination unit" in Claim 2 corresponds to the group management units 1307a and 1307b in FIG. 12. The "rule generation unit" in Claim 4 corresponds to the user information sharing units 1301a and 1301b. Further, the "behavior determination unit" in Claim 6 corresponds to the feedback collection units 1308a and 1308b in FIG. 12.

In the present embodiment, each of the terminals has the above-described structure executes the following processes. This makes it possible to realize the information notification service based on the TPO of plural users.
(1) Generation and notification of a group.
(2) Generation of a user profile and an information notification rule.
(3) Determination of a group whose members share the information.
(4) Sharing of the user profile and the information notification rule.
(5) Obtainment of an area status.
(6) Determination of an information notification rule.
(7) Execution of the information notification rule.
(8) Notification of the execution result of the information notification rule.
(9) Display of the execution result of the information notification rule.
(10) Obtainment of the feedback result.
(11) Change and cancel of the user profile and the information notification rule.

Each process will be described below.

### (1. Generation and notification of a group)

In the case of newly generating a group which is made up of specific users, the communication terminal A1300a generates the following information by means of the group management unit 1307a.

### (a) Group ID

It is a value which makes it possible to uniquely identify a group in the communication system of the present invention. A concrete format of a group ID is not prescribed in the present invention, but it is assumed that a UUID, a URI or the like is used.

### (b) Group member information

It is the information for specifying a user who can participate in the group which is uniquely specified by the above-described Item (a). The following information is present in the group member information.
(b-1) Member list
It is realized as a list of: values (hereinafter referred to as user IDs) each of which enable to uniquely identify the corresponding user; and values (hereinafter referred to as terminal IDs) each of which enable to uniquely identify the corresponding communication terminal. The users and terminals included in this member list are handled as members of the group.
(b-2) Authentication information
It is the authentication information to be owned by the terminals which can participate in the group or the information concerning the authentication information. The present invention does not specifically prescribe such information. However, such information is a certificate or a password which has been issued by a specific CA (Certificate Authority) or the related information. The users or communication terminals which own a certificate and a password are handled as members of the group.
(b-3) TPO information
It is the TPO information which is satisfied by the terminals which can participate in the group. The present invention does not specifically prescribe such information. However, it is the information made up of specific position information (for example, "in Kyoto city" and "in Tokyo dome"), specific preference information (for example, "a fan of an artist" and "a fan of Hanshin Tigers") or the like. The users or the communication terminal which satisfy these conditions are handled as the group members.
The above-described group member information becomes necessary at the time when:
- The communication terminals of the group members are searched through a network; and
- Authentication as to whether the communication target terminals are the members in the same group is executed.

### (c) Generation of the description information concerning the group

It is the information for notifying users of the type of the generated group. For example, information such as "the group of Yamada family" and "the group of Tiger fans" is described.

The group information which is made up of the above-described information (a) to (c) is managed by the group management unit.

The group management unit can execute the notification process in order to notify the other users of the generated group information.

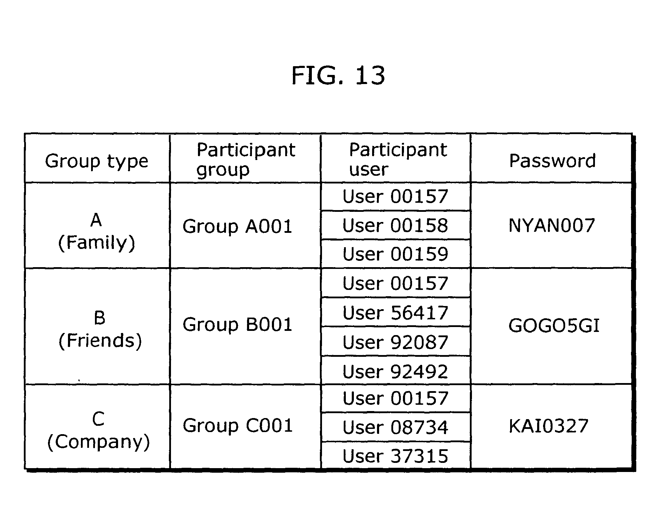

It is assumed that the following methods are used as the execution examples of the notification processing.
- The generated group information is registered in a server which manages the group information all together.
- The generated group information is broadcast towards the whole network. The communication terminal B1300b which has received the group information through broadcast holds the information by means of the local group management unit 1307b.
- The generated group information is notified by means of a unit such as electronic mail to the known users. The user who has obtained the information inputs the group information in the group management unit 1307b by means of the input interface which is installed in the local communication terminal B1300b and makes the group management unit 1307b hold the group information. FIG. 13 shows an example of group information. The communication terminal of the user having the user ID "00157" causes the group management unit to hold the group information. As shown in the figure, the group information includes the descriptions of: types of groups to which a user belongs; participant groups; participant user; and passwords. According to the group information, it is shown that the user having the user ID "00157" belongs to the family group A having the group ID "A001", the friend group B having the group ID "B001", and the company group C having the group ID "C001". Also, in the case where the family group A shares the information notification rule, a user 00158 and a user 00159 who are the other participant users execute authentication process using the common password NYAN007 and then send the information notification rule to be shared.

According to the above-described procedure, a group is generated in the information notification service in this embodiment, and the information is managed. Note that all the users and communication terminals are not required to generate a group for themselves.

### (2. Generation of a user profile and an information notification rule)

The description will be omitted because it is the same as the description of the earlier-described Item 1 concerning "Generation of a user profile and an information notification rule" in the first embodiment.

### (3. Determination of a group with which information is shared)

A user who wants to share TPO information with specific users needs to specify the group to which these users belong. In order to determine the group to which the user belongs, the user obtains the group information in the above-described Item 1 concerning "Generation and notification of a group", and determines the group in which the user should participate based on the details (the group member information and the description information concerning the group).

In order to obtain the group information, the following methods using the group management unit 1307a are assumed.
(a) Asking the server which manages the group information about the group information of the group in which the communication terminal participate.
(b) Asking the whole network about the group information of the group in which the communication terminal participate.
(c) Using the group information which is held by the group management unit of the communication terminal.
The obtained group information is displayed on the output interface of the communication terminal. The user determines the group in which he or she participate based on the information and obtains the ID. Otherwise, the user may previously obtain the ID of the group in which he or she wants to participate from another user by means of electronic mail or through conversation.

### (4. Sharing of a user profile and an information notification rule)

A user who wants to share TPO information with other users executes the following procedures by means of the group management unit:
( i ) Specifying the ID of a group with which he or she wants to share information;
( ii ) Obtaining the addresses of the communication terminals which belong to the specified group; and
( iii ) Authenticating that these terminals which have exchanged their addresses with each other belong to the same group.

As to the specification method of a group ID in Item ( i ), it is assumed that the group ID which has been obtained in the step of Item 3 concerning "Determination of the group with which information is shared" is inputted in the group management unit 1307b by means of the input interface which is installed in the communication terminal.

As to the unit for detecting addresses of group members in Item ( ii ), the following methods are assumed.
- In the case where the address information of the communication terminals of the respective members is included in the group member information in the group information which has been obtained in the earlier described step of Item 3 concerning "Determination of the group with which information is shared", the address information is used.
- Asking the group server which manages the addresses of the communication terminals of the group members about the addresses for each group.
- Asking the whole network about the address information of the terminals which belong to the group having the same group ID.

(iii) Authentication is not necessarily executed. However, in the case where the information concerning the authentication is included in the group information which has been obtained in the earlier-described step of Item 3 concerning "Determination of the group with which information is shared, the communication terminal A1300a determines whether the communication terminal A1300a and the communication terminal B1300b which has the obtained address belong to the same group by means of the group management unit 1307a and 1307b. No concrete authentication methods are prescribed in the present invention, but the following authentication methods are assumed:
- Authentication based on a PKI certificate; and
- Authentication based on a password.

The above-described steps ( i ) to ( iii ) enable the communication terminal B1300b to communicate with the communication terminal A1300a in the same group. The communication terminal 1300b sends the user profile and the information notification rule which have been generated by means of the user information sharing unit 1301b in the step of Item 2 concerning "Generation of a user profile and an information notification rule". The communication terminal A1300a holds the received information by means of the local user information sharing unit 1301a.
Only two communication terminals are described in FIG. 12, but it should be noted that the target with which the communication terminal B1300b shares information is not limited to one terminal, plural terminals may be used.

### (5. Obtainment of an area status)

The communication terminal A1300a stores its own or another terminal's user profile and information notification rule in the user information sharing unit, and collects, for example, the information of the service and the product which is the target of the information notification or the position information which becomes the execution rule of the information notification rule.

The present invention does not prescribe a concrete realization method for collecting area information and the format of the obtainable information, but the following methods for obtaining area information are assumed:
(a) A wireless communication for short distance such as the Bluetooth and a wireless LAN;
(b) A product tag reader such as an RFID reader and a bar code reader;
(c) A GPS (position information service); and other means.

### (6. Determination of an information notification rule)

When area information is obtained by the area information obtainment unit 1302a, the communication terminal A1300a determines which information notification should be executed by the rule execution determination unit 1303a.

The following two types of determination are executed by the rule execution determination unit in this embodiment.

### (a) Determination of conformity to the user profile

In the case where the information of a product or a service has been obtained by the area information obtainment unit 1302a, the rule execution determination unit 1303a determines whether there is a user to whom the information should be notified as to the user profile which is held by the user information sharing unit 1301a. In the case where the made judgment as to the user profile is that information notification should be executed, it notifies the rule execution unit 1304a of the user profile and the area information.

### (b) Determination of conformity to the description details of the information notification rule

The rule execution determination unit 1303a determines whether a rule to be executed is included among the information notification rules which are held by the user information management unit 1301a based on the area information which has been obtained by the area information obtainment unit 1302a and the user profile which is held by the user information management unit 1301a. In the case where the information notification rule is realized as an ECA rule, it determines whether the action part should be executed or not by checking the event part based on the area information and checking the condition part based on the area information and the user profile. In the case where a made judgment to an information notification rule is that information notification should be executed, the rule execution determination unit notifies the rule execution unit 1304a of the rule, and the user profile and the area information which are necessary for executing the rule. Also, in the case where the number of rules which can be executed at one time is limited as the execution rule for the information notification rule, for example, there is a rule defining that "An information notification rule for encouraging a member to buy milk is executed to only a member at one time.", the execution determination unit 1303b of the communication terminal which executes the rule can ask the rule execution determination unit of the communication terminal B1300b which has generated the rule whether the rule can be executed or not.

### (7. Execution of the information notification rule)

The rule execution unit 1304a of the communication terminal A1300a which executes the information notification generates information of, for example, a product or a service which is notified to the user.

The operations of the rule execution unit 1304a in the embodiment are classified into the following two types depending on the information to be sent by the rule execution determination unit 1303a.

(a) In the case where a user profile and area information are sent by the rule execution determination unit 1303a, the rule execution unit automatically performs selection, generation and change of the information which should be notified to the user based on the user profile and the area information. This is the information notification service whose style is the same as the style of the information recommendation service based on the user profile which is generally provided through Web sites.

(b) In the case where an information notification rule, a user profile and area information are sent by the rule execution determination unit 1303a, the rule execution unit generates the information which should be notified based on the user profile and the area information according to the description of the rule.

Note that the present invention does not specifically prescribe the details of the information to be generated by the rule execution unit and the format, but an HTML, a PDF, an XML and the like are assumed formats.

In the case where the user profile which has been used for rule execution corresponds to the user of another terminal in the above Item (a) or in the case where the information notification rule includes the description of sending the result to another terminal in the above Item (b), the rule execution unit notifies the information to the execution result communication unit 1306a after generating the information to be notified to the user. In the case where there is no need to send the information to another terminal, it notifies the generated information to the local execution result display unit 1305a.

### (8. Notification of the execution result of the information notification rule)

In the case where the information generated by the rule execution unit 1304a of the communication terminal A1300a should be notified to the user of another communication terminal B1300b, the execution result communication unit 1306a sends the information generated by the rule execution unit.

In the case where the user of the communication terminal A1300a executes information notification to the user of the communication terminal B1300b, the user of the communication terminal A1300a specifies the address information (such as the IP address and the port number) of the communication terminal B1300b.

The method for obtaining address information is not specifically limited in the present invention, but the following methods are assumed:
(a) The user of the communication terminal A1300a directly inputs the address information of the communication terminal B1300b by means of the input interface which is installed in the communication terminal A1300a;
(b) The communication terminal A1300a asks the server which manages the address information of the communication terminal about the address of the communication terminal B1300b; and
(c) The communication terminal A1300a asks the whole network about the address of the communication terminal B1300b;
(d) Using the address of the notification destination described in the information notification rule which has been executed by the communication terminal A1300a is used; and
(e) Using the address of the user B's terminal described inside the user B's file which is managed by the user information sharing unit 1301a of the communication terminal A1300a.

The information received by the execution result communication unit 1306b of the communication terminal B1300b is notified to the execution result display unit 1305b.

### (9. Display of the execution result of the information notification rule)

The execution result display unit 1305a which is installed in the communication terminal A1300a of the present invention displays the information which has been notified by the rule execution unit 1304a or the execution result communication unit 1306a by means of the output interface which is installed in the communication terminal.

### (10. Obtainment of the feedback result)

The feedback obtainment unit 1308b which is installed in the communication terminal B1300b in the present invention obtains a user behavior such as "I have bought milk." and "I have bought a CD.".

A concrete realization means for obtaining such a user behavior is not limited in the present invention, but the following methods are assumed:
- The user manually inputs his or her behavior in response to the notification information by means of a GUI; and
- The user inputs the tag information of the purchased product.

Also, in the case where no purchase information has obtained within a certain time period after the information display (for example, "Milk is on sale nearby.") of the earlier-described Item 9 concerning "Display of the execution result of the information notification rule.", the method for considering that milk has not bought may be used.

The obtained user behavior information is notified to the user information sharing unit 1301b through the local feedback obtainment unit.

### (11. Change and cancel of the user profile and the information notification rule)

In the case where the user behavior information 1311 which has been obtained in the earlier-described Item 10 concerning "Obtainment of a feedback result" is inputted to the user information sharing unit 1301a by means of the feedback obtainment unit 1308a, the user information sharing unit 1301b changes or cancels, as the need arises, the user profile or the information notification rule which the user information sharing unit 1301b itself holds. More specifically, in the case where the behavior information indicating that "I will buy milk.", the information notification rule defining that "Notification is executed in the case where milk is on sale nearby." is cancelled.

Also, the information indicating that "I have bought milk." is added to the behavior history of the user profile.
The user profile or the information notification rule which has been changed or cancelled is notified to all the group members who share the information by means of the user information sharing unit.

The method of detecting the communication terminals of the group members at this time and the sharing procedure of the information notification rule after the detection will not be described because the descriptions of them are the same as the ones provided in the earlier step.

According to the above-described procedures, the information notification service based on TPO information of plural users is realized in the communication terminal and the communication system in the present invention.

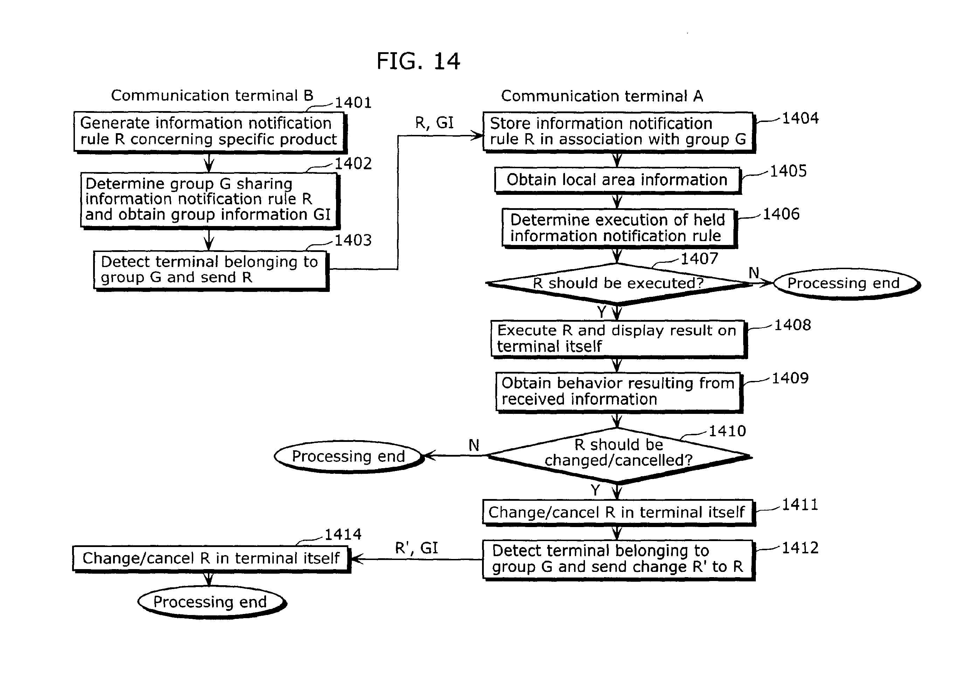

FIG. 14 is a diagram showing the process flow based on the information notification rule which is shared in the family group G. Here, the information notification process for "encouraging a family member to buy milk" is taken as an example and the process flow will be shown.

An execution example of a TPO information notification service will be described below with reference to examples in FIG. 12 and FIG. 14.

The user of the communication terminal B1300b generates the information notification rule R1310 (encouraging a family member to buy milk) concerning a desired product (Step 401).

The user of the communication terminal B1300b asks the group management unit 1307b and obtains the group information GI of the group G (corresponding to the family group in this example) which shares the rule R. Group information GI includes a group ID for uniquely identifying a group and the information concerning constituent members and the like. In the case where a user determines that the rule R is shared in this group based on the group information GI, it inputs the rule R and the group information GI in the user information sharing unit 1301b (Step 402).

Using the group management unit 1307b of the communication terminal B, the address information of the terminals which belong to the group G is obtained. In the case where the addresses of the terminals which belong to the group G are obtained, the rule R and the group information GI are sent to the terminals by means of the user information sharing unit 1301b (Step 403). Note that the number of the terminals to which the information is sent is not limited to one.

The communication terminal A stores the received rule R and the group information GI by means of the user information management unit 1301a (Step 404). Note that it is possible to execute the procedure where the group management units 1307a and 1307b execute mutual authentication as to whether they belong to the same group and exchange the rule R after that they belong to the same group is authenticated.

The communication terminal A1300a obtains area information from the adjacent information terminal 1308 by means of the area information obtainment unit 1302a (Step 405).

The rule execution determination unit 1303a of the communication terminal A1300a determines how to execute information notification based on the information which is stored in the user information sharing unit 1301a and the area information which has been obtained by the area information obtainment unit 1302a (Step 406).

Here, whether the information notification rule based on the rule R which has been obtained in Step 404 should be executed or not is determined (Step 407). In this example, in the case where the information indicating that there is "milk" is included in the area information of the communication terminal A1300a, the rule execution determination unit 1303a executes the information notification rule based on the rule R (406: Yes). In the other case, the information notification based on the rule R is not executed (406: No).

The rule execution unit 1304a executes the information notification process based on the rule R. In this example, it generates the information indicating that "There is milk which is desired by our family in the proximity of your terminal.", and presents the information to the user having the terminal by means of the execution result display unit 1306a (Step 408).

The user behavior concerning the information which has been notified in Step 408 is obtained by the feedback obtainment unit 1308a (Step 409). A concrete realization unit for obtaining a user behavior is not limited in the present invention, but the following methods are conceivable: the method where the user manually inputs his or her own behavior in response to the notification information by means of GUI; and the method where the user inputs the tag information of a purchased product. Also, it is possible to employ the method of considering that "Milk has not been bought." in the case where the purchase information has not obtained within a certain time period. In this example, the user behavior information UI indicating that "Milk has been bought." or "Milk has not been bought." is obtained according to one of the above-described methods, and the user behavior information UI is notified to the user information sharing unit 1301a by means of the feedback obtainment unit.

Based on the user behavior information UI, the user information sharing unit 1301a determines whether or not the information notification rule R should be changed or cancelled (Step 410).

In this example, in the case where the user behavior information indicates that "I have bought milk.", the information notification rule R is cancelled from the group G, but in the case where the user behavior information UI does not indicate the same, the process is completed (410: No). In the case where the information notification rule R is determined as the rule R which is not changed or cancelled, the next step is executed.

The change information R' concerning the information notification rule R is generated. Also, according to that, the local terminal information R is changed or cancelled by the user information sharing unit 1301a (Step 411).

The change information R' which has been generated in Step 411 is sent to the terminals which belong to the group G sharing the rule R. The address information of the terminals which belong to the group G is the same as the one in Step 403 (Step 412).

The communication terminal B obtains the received change information R' by means of the user information management unit 1301b. After that, according to the change information R', the local terminals change or cancel the rule R (Step 413). Note that it is possible to execute the procedure where the group management unit 1307a and 1307b execute mutual authentication as to whether they belong to the same group or not and exchange the rule R after that they belong to the same group is authenticated.

Executing the above-described Steps 401 to 413 makes it possible to realize the TPO information notification service where the terminals which belong to the same group share TPO information.

### Industrial Applicability

The information notification system of the present invention is useful as a personal computer, a mobile terminal, a mobile phone and the like which provide a TPO information service according to a user TPO.

## Claims

1. An information notification apparatus comprising:
a rule holding unit operable to hold (a) an information notification rule which is generated based on information concerning a preference of a specific user, the rule defining that predetermined information should be notified to the specific user in the case where the specific user satisfies a predetermined condition and (b) an information notification rule which is generated based on information concerning a preference of another user; and
an information notification unit operable to notify the specific user of predetermined information which needs to be notified to the another user, in the case where a condition which is defined by the information notification rule concerning the another user is satisfied by the specific user.

2. The information notification apparatus according to Claim 1,
wherein said rule holding unit is operable to hold at least one of the information notification rules in association with each of groups which is made up of users,
said information notification apparatus further comprises
a group determination unit operable to manage information concerning each of the groups and operable to determine a group to which the specific user belongs, and
said information notification unit is operable to notify the specific user of the predetermined information in the case where a condition which is defined by one of the information notification rules is satisfied by the specific user, the rule being held in association with each of the determined groups.

3. The information notification apparatus according to Claim 2,
wherein said information notification unit is operable to notify the predetermined information to only members of groups to which each user belongs, the information being based on the information notification rule of each user.

4. The information notification apparatus according to Claim 2,
wherein the information concerning user's preference includes at least information indicating user's current position and preference,
said information notification apparatus further comprises
a rule generation unit operable to generate the information notification rule based on inputted information which is necessary for generating an information notification rule based on information concerning user's preference, the necessary information being received through one of a dialogic input from a user and a communication network, and
said rule holding unit is operable to hold the respective information notification rules generated by the users, in association with one or more of the groups to which each user belongs.

5. The information notification apparatus according to Claim 2,
wherein said information notification unit is operable to restrict the number of people to which information is notified to a predetermined number on a group-by-group basis, in the case where the number of users who satisfy a same condition at one time is plural.

6. The information notification apparatus according to Claim 1, said apparatus further comprising
a behavior determination unit operable to determine whether the user who received the notification has behaved in a manner indicated in the notified information, based on one of the followings:
an input received from a user; and data related to the notified information.

7. An information notification method comprising:
a rule holding step of holding (a) an information notification rule which is generated based on information concerning a preference of a specific user, the rule defining that predetermined information should be notified to the specific user in the case where the specific user satisfies a predetermined condition and (b) an information notification rule which is generated based on information concerning a preference of another user; and
an information notification step of notifying the specific user of the predetermined information which the specific user should notify to the another user in the case where a condition which is defined by the information notification rule concerning the another user is satisfied by the specific user.

8. A program causing a computer to execute:
a rule holding step of holding (a) an information notification rule which is generated based on information concerning a preference of a specific user, the rule defining that predetermined information should be notified to the specific user in the case where the specific user satisfies a predetermined condition and (b) an information notification rule which is generated based on information concerning a preference of another user; and
an information notification step of notifying the specific user of the predetermined information which the specific user should notify to the another user in the case where a condition which is defined by the information notification rule concerning the another user is satisfied by the specific user.
